# EUROPÄISCHE PATENTSCHRIFT

(11) **EP 1 402 162 B1**
(45) Veröffentlichungstag und Bekanntmachung des Hinweises auf die Patenterteilung: **15.12.2004**
(21) Anmeldenummer: 02745112.9
(22) Anmeldetag: 01.06.2002
(51) Int. Cl.: F02D 41/14, F02D 33/02

(54) **VERFAHREN UND VORRICHTUNG ZUR STEUERUNG EINER BRENNKRAFTMASCHINE**
METHOD AND DEVICE FOR CONTROLLING AN INTERNAL COMBUSTION ENGINE
PROCEDE ET DISPOSITIF DE COMMANDE D'UN MOTEUR A COMBUSTION INTERNE

(30) Priorität: 15.06.2001 DE 10129071
(43) Veröffentlichungstag der Anmeldung: 31.03.2004
(73) Patentinhaber: ROBERT BOSCH GMBH, 70442 Stuttgart (DE)
(72) Erfinder: WILD, Ernst, 71739 Oberriexingen (DE); WEGENER, Sabine, 71679 Asperg (DE); HILD, Rainer, 71696 Moeglingen (DE)
(86) Internationale Anmeldenummer: PCT/DE2002/002015
(87) Internationale Veröffentlichungsnummer: WO 2002/103180

(56) Entgegenhaltungen:
- EP-A- 0 953 752
- EP-A- 0 953 753
- EP-A- 1 028 242
- DE-A- 4 027 707
- DE-A- 19 608 630
- US-A- 4 635 601

## Beschreibung

### Stand der Technik

Die Erfindung betrifft ein Verfahren und eine Vorrichtung zur Steuerung einer Brennkraftmaschine.

Bei modernen Motorsteuerungen wird aus einer vom Fahrer oder von externen Steuersystemen vorgegebenen Sollgröße für eine Ausgangsgröße der Brennkraftmaschine, wie Drehmoment, Leistung, etc., eine Sollgröße für die Luftzufuhr zur Brennkraftmaschine, z.B. die Füllung (Luftmasse) im Brennraum, gebildet. Diese stellt wiederum die Basis für die Berechnung eines Sollwinkels (Sollstellung) der Drosselklappe der Brennkraftmaschine dar. Auf der anderen Seite wird mittels einer Messeinrichtung eine Ist Größe für die Luftzufuhr (z.B. die Istfüllung der Brennkraftmaschine) berechnet. Dieser Wert bildet Basis für den Istwert der Ausgangsgröße der Brennkraftmaschine, beispielsweise das Istmoment. Ein Beispiel für eine derartige Vorgehensweise ist für eine momentenbasierte Motorsteuerung, bei welcher ein Sollmoment vorgegeben und durch Umrechnung in eine Sollluftfüllung bzw. in einen Sollwinkel für die Drosselklappe eingestellt wird, aus der DE-A 196 18 385 bekannt.

Aus der DE-A 196 08 630 ist ein Beispiel bekannt, bei welchem aus einer vorgegebenen Sollfüllung für die Brennkraftmaschine einerseits ein Drosselklappenwinkelsollwert, andererseits ein Sollladedruckwert abgeleitet wird. Dabei wird der Druckabfall über der Drosselklappe vorgegeben.

Insbesondere aufgeladene Brennkraftmaschinen, aber auch andere Brennkraftmaschinentypen neigen in bestimmten Betriebsbereichen zum Ruckeln, dass heißt es werden Schwingungen im Triebstrang erzeugt, welche unangenehme Rückwirkungen auf die Karosserie haben können. Es hat sich gezeigt, dass durch Absenken der Füllung, bei aufgeladenen Motoren des Ladedrucks, diese Ruckelerscheinungen verschwinden. Es besteht somit mit Bedarf einen einfachen, wirksamen und ohne Aufwand zu applizierenden Vorgehensweise zur Vermeidung bzw. Verminderung solcher Ruckelerscheinungen in Verbindung mit Brennkraftmaschinen.

### Vorteile der Erfindung

Durch Absenkung der Füllung, insbesondere des Ladedrucks, abhängig von Ruckelkenngrößen werden auf wirksame, einfache, ohne Aufwand zu applizierende Weise Ruckelerscheinungen vermieden bzw. deutlich verringert.

In besonders vorteilhafter Weise wird als Ruckelkenngrößen bzw. als Maß für die Ruckelneigung die Schwankungen der Motordrehzahl oder der Zündwinkelwirkungsgrad, d. h. eine Größe, die die Abweichung des aktuell eingestellten Zündwinkels von einem optimalen Zündwinkel, vorzugsweise einen momentenoptimalen Zündwinkel, repräsentiert, verwendet.

Ergebnis ist ein zuverlässiger Regler in allen Betriebsbereichen des Motors, ohne dass eine aufwendige Steuerung zur Ruckelverringerung bzw. -vermeidung notwendig wäre.

Aufwendige Maßnahmen für eine korrekte Bedatung des Reglers wie z.B. Versuche in großer Meereshöhe oder in einer Höhenkammer sowie Einstellung von Ansauglufttemperaturen sind nicht notwendig.

Durch Absenken der Füllung (insbesondere des Ladedrucks) kann in vorteilhafter Weise ein früherer Zündwinkel eingestellt werden, so dass ein besserer Zündwinkelwirkungsgrad entsteht und somit der Motor optimaler betrieben werden kann. Dies trägt auch zur Verringerung des Kraftstoffverbrauchs bei.

Weitere Vorteile ergeben aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt dabei ein Übersichtsschaltbild einer Steuereinheit zur Steuerung einer aufgeladenen Brennkraftmaschine. Figur 2 zeigt ein Ablaufdiagramm zur Bildung des Ladedrucksollwertes, der durch eine Ladedruckregelung eingestellt wird, wobei bei Ruckeln oder bei Ruckelneigung ein Korrektursignal zur Ladedruckabsenkung gebildet wird. Figur 3 zeigt ein Ausführungsbeispiel zur Bestimmung dieses Korrekturfaktors auf der Basis von Zündwinkelwirkungsgradwerten.

### Beschreibung von Ausführungsbeispielen

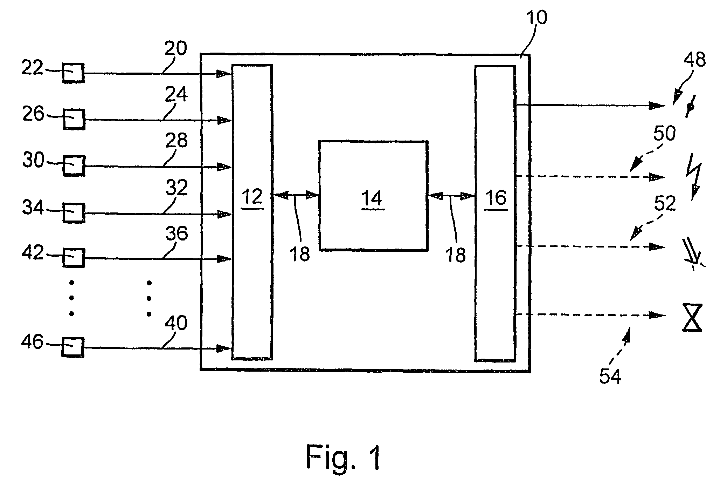

Figur 1 zeigt eine Steuereinrichtung zur Steuerung des Drehmoments bzw. der Leistung einer Brennkraftmaschine. Die Steuereinheit (10) umfasst dabei eine Eingangsschaltung (12), wenigstens einen Mikrocomputer (14) und eine Ausgangsschaltung (16). Eingangsschaltung, Mikrocomputer und Ausgangsschaltung sind über ein Bussystem (18) zum gegenseitigen Datenaustausch verbunden. Der Eingangsschaltung (12) der Steuereinheit (10) sind Eingangsleitungen (20, 24, 28, 32 und 36-40) zugeführt. In einem bevorzugten Ausführungsbeispiel sind diese Eingangsleitungen in einem Bussystem, z. B. CAN, zusammengefasst. Dabei verbindet die Eingangsleitung (28) die Steuereinheit (10) mit einer Messeinrichtung (30) zur Erfassung des zugeführten Luftflusses, z.B. einem Luftmassenmesser. Die Eingangsleitung (20) verbindet die Steuereinheit (10) mit einer Messeinrichtung (22) zur Erfassung des Betätigungsgrades eines vom Fahrer betätigbaren Bedienelements, z.B. eines Fahrpedals. Die Eingangsleitungen 24 und 32 verbinden die Steuereinheit 10 mit Messeinrichtungen 26 und 34 zur Erfassung der Drosselklappenstellung und der Motordrehzahl. Ferner sind Messeinrichtungen (42-46) vorgesehen, die weitere Betriebsgrößen der Brennkraftmaschine und/oder des Fahrzeugs erfassen und entsprechende Messsignale über die Leitungen (36-40) zur Steuereinheit (10) übermitteln. Beispiel für derartige Betriebsgrößen sind Abgaszusammensetzung, Motortemperatur, etc. Über Ausgangsleitungen und die Ausgangsschaltung (16) steuert die Steuereinheit (10) die Brennkraftmaschine. Über eine erste Ausgangsleitung wird eine elektrisch betätigbare Drosselklappe (48) zur Beeinflussung der Luftzufuhr zur Brennkraftmaschine betätigt. Ferner wird über weitere Ausgangsleitungen (50, 52) die Kraftstoffzufuhr sowie der Zündwinkel einstellt. Ferner wird über die Leitung 54 ein Lader gesteuert.

Im bevorzugten Ausführungsbeispiel einer momentenbasierten Motorsteuerung wird, wie aus dem eingangs genannten Stand der Technik bekannt, das vorgegebene Sollmoment in eine Sollfüllung umgerechnet. Daraus wiederum wird ein Solldrosselklappenwinkel bestimmt, welcher durch Betätigen der Drosselklappe im Rahmen einer Lageregelung eingestellt wird. Ergänzend zu dieser Vorgehensweise wird, wie ebenfalls aus dem eingangs genannten Stand der Technik bekannt, bei einem aufgeladenem Motor aus dem aus der Sollfüllung bestimmten Sollsaugrohrdruck und einem vorgegebenen Druckverhältnis über der Drosselklappe ein Sollladedruck für die Ladedruckregelung berechnet, welcher im Rahmen der Ladedruckregelung eingestellt wird. Der Sollladedruck wird also aus Sollsaugrohrdruck und vorgegebenem Solldruckverhältnis an der Drosselklappe gebildet. Letzteres wird auf der Basis des Sollsaugrohrdruckwertes und/oder des Füllungswertes und der Motordrehzahl bestimmt und liegt üblicherweise zwischen 0,95 und 1.

Wie eingangs erwähnt neigen aufgeladene Motoren in bestimmten Betriebsbereichen zum Ruckeln. Es hat sich gezeigt, dass dies vor allem in Resonanzbereichen des als Feder-Masse-Systems darstellbaren Motor-Antriebsstrang durch Streuung der Momentenbeiträgen der einzelnen Verbrennungen des Motors herrührt. Diese Momentenstreuungen sind dabei besonders bei schlechten Zündwinkelwirkungsgraden groß, d.h. bei späten Zündwinkeleinstellungen. Dann ist nämlich die Abweichung zwischen dem optimalen (z.B. momentenoptimalem) und dem eingestellten Zündwinkel besonders groß. Es hat sich auch gezeigt, dass je schlechter dieser Zündwinkelwirkungsgrad ist, umso steiler der Momentenabfall. Das hat wiederum zur Folge, dass die natürlichen Verbrennungsstreuungen in diesem Zustand größere Momentenschwankungen auslösen. Bei aufgeladenen Motoren kommt hinzu, dass diese sehr klopffreudig sind. Mit steigender Ansaugluft und größerem Ladedruck verschiebt sich die Klopfgrenze immer mehr zu späteren Zündwinkeln hin. Soll ein Motor daher ohne Klopfen betrieben werden, verringert sich durch diesen Zusammenhang der Zündwinkelwirkungsgrad weiter.

Eine geeignete Gegenmaßnahme zur Vermeidung oder Verringerung des Ruckelns bzw. der Ruckelneigung bei gleichzeitiger Bereitstellung einer früheren Zündwinkels und somit eines besseren Zündwinkelwirkungsgrades ist die Absenkung des Ladedrucks bei Ruckeln oder Ruckelneigung. Zur Erkennung der Ruckelneigung werden dabei direkte oder indirekte Größen herangezogen, aus denen Ruckeln oder eine Ruckelneigung ableitbar ist. Dabei haben sich insbesondere zwei Vorgehensweisen als geeignet erwiesen.

Zum einen wird die Drehzahlamplitude zur Erfassung der Ruckelneigung ausgewertet. Übersteigt die aktuelle Drehzahlamplitude einen vorgegebenen Grenzwert, so wird die Abweichung der Drehzahlamplitude vom Grenzwert einem Regler zugeführt, der dafür sorgt, dass der Reglerausgang nach Maßgabe der Größe der Abweichung von hohen Werten auf kleinere Werte absinkt. Startwert des Faktors beim Überschreiten der Drehzahlamplitudengrenzwerts ist dabei vorzugsweise 1. Der vom Regler ermittelte Faktor wird bei der Bestimmung des Ladedrucks als Korrekturgröße verwendet, wobei bei einem Wert 1 des Korrekturwerts keine Korrektur erfolgt, bei zunehmend kleineren Werten eine Absenkung des Ladedrucks die Folge ist. Unter Drehzahlamplitude wird in diesem Zusammenhang der Betrag der Amplitude der Drehzahlschwankung verstanden.

In einem zweiten Ausführungsbeispiel wird zur Erkennung der Ruckelneigung die indirekte Größe des Zündwinkelwirkungsgrades verwendet. Dabei wird als Eingang des oben dargestellten Reglers die Abweichung des aktuellen Zündwinkelwirkungsgrades von einem Zündwinkelwirkungsgradgrenzwert verwendet. Die Signalverarbeitung des Reglers erfolgt dabei analog zu der oben dargestellten. D. h. es wird ein Korrekturfaktor beginnend mit 1 bei Unterschreiten des Grenzwertes in Abhängigkeit der Abweichung auf kleinere Werte vorgenommen, bis die Abweichung den Grenzwert wieder überschreitet.

In einem besonderen, bevorzugten Ausführungsbeispiel ist der Regler ein reiner Integralregler, dessen Ausgangsgröße zwischen einem vorgebbaren Minimalwert zwischen 0 und 1 und einem Maximalwert 1 sich verändern kann. Ist der aktuelle Zündwinkelwirkungsgrad größer als ein Grenzwert, der vorzugsweise drehzahlabhängig ist, läuft der Korrekturfaktor in Richtung größerer Werte, bis er an der oberen Grenze, dem Wert 1, angehalten wird. Die Absenkung des Ladedrucks oder allgemeiner der Füllung der Brennkraftmaschine wird damit unwirksam.

Ist der Zündwinkelwirkungsgrad kleiner als der Grenzwert, ist Ruckeln zu erwarten. Analog zur oben dargestellten Lösung läuft der Ausgang des Reglers in Richtung kleinere Werte, bis der Zündwinkelwirkungsgrad wieder über den Grenzwert ansteigt, d.h. die Ruckelneigung aufhört, oder bis der Minimalwert des Reglers erreicht ist. Im Allgemeinen wird im unteren Teilastbereich der Zündwinkelwirkungsgrad wegen der zurückgehenden Klopfneigung besser, so dass hier der Korrekturfaktor wieder auf eins gehen wird. In vorteilhafter Erweiterung wird jedoch der Regler nur in Volllastnähe aktiviert. Dadurch muss bei einem erneuten Wechsel in die Volllast aus der unteren Teillast der Korrekturwert nicht erneut gelernt werden. Durch das Anhalten des Reglers bleibt der letzte Wert im Volllastbereich des Korrekturfaktors erhalten. In vorteilhafter Weise dient als Maß für die Volllastnähe das Verhältnis aus aktuellem und maximalem Saugrohrdruck, das zur Erkennung der Volllastnähe eine vorgegebene, vorzugsweise drehzahlabhängige Schwelle überschreiten muss.

Anstelle eines reinen Integralreglers werden in anderen Ausführungsbeispielen Proportionalregler oder Proportional-Integral-Regler eingesetzt.

Eine Außenwirkung (Wirkung an den Ausgängen der Steuereinheit) der beschriebenen Vorgehensweise ergibt sich dadurch, dass bei Verschieben der Zündwinkel im Basiszündkennfeld nach spät im Volllastbereich eine Absenkung des Ladesolldrucks und damit auch des eingestellten Ladedrucks erzeugt wird, ohne dass die Klopfregelung aktiv wird.

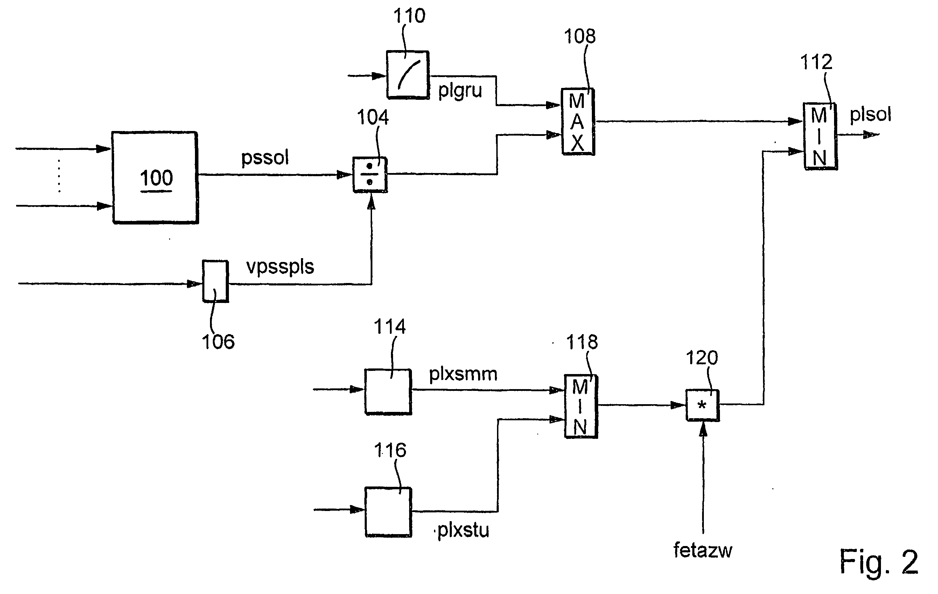

In Figur 2 ist ein Ablaufdiagram dargestellt, welches eine bevorzugte Ausführung der Bestimmung des Ladedrucksollwertes und dessen Korrektur im Sinne der obigen Darstellung darstellt. Das Ablaufdiagramm repräsentiert dabei das Programm eines Mikrocomputers, welcher Teil der Steuereinheit ist. Die einzelnen Blöcke beschreiben dabei Programme, Programmteile oder Programmschritte, während die Pfeile den Informationsfluss darstellen.

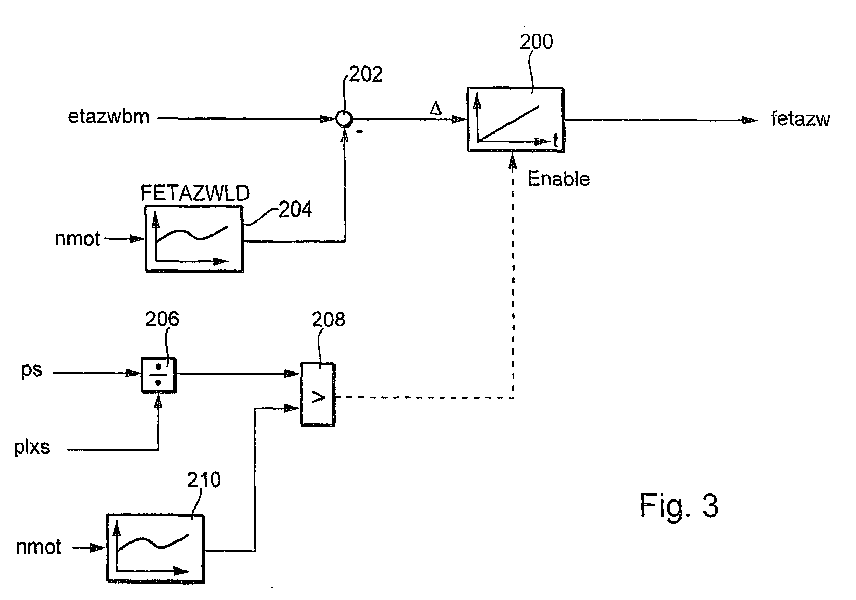

Zunächst wird in 100 beispielsweise wie im eingangs genannten Stand der Technik beschrieben nach Maßgabe von Betriebsgrößen wie Momentenwunsch, Motordrehzahl, etc. ein Sollwert für den Saugrohrdruck pssol der Brennkraftmaschine berechnet. Dieser Solldruckwert wird in anderen Ausführungsbeispielen auf andere Art und Weise, beispielsweise nur aus dem Momentenwunsch abgeleitet. Dieser Sollsaugrohrdruck wird in einer Verknüpfungsstelle 104 durch den Faktor VPSSPLS dividiert. Dieser Faktor repräsentiert ein gewünschtes Druckverhältnis über der Drosselklappe und ist im bevorzugten Ausführungsbeispiel zwischen 0,95 und 1. Dieser Faktor wird in einer Kennlinie bzw. einem Kennfeld 106 nach Maßgabe wenigstens einer Betriebsgröße, beispielsweise der Drehzahl, bestimmt. Der auf diese Weise korrigierte Solldruckwert wird einer Maximalwertauswahlstufe 108 zugeführt. Diese wählt zwischen den zugeführten Größen des korrigierten Sollsaugrohrdrucks und des Grundladedruck PLGRU den größeren Wert aus. Der Grundladedruck beschreibt dabei den Ladedruck, der allein durch die Luftströmung und die damit verbundene Betätigung der Turbine auftritt. Dieser wird in 110 beispielsweise abhängig von dem Maß der Luftmassenströmung beispielsweise aus einer Kennlinie ermittelt. Der in 108 ausgewählte Maximalwert wird einer Minimalwertauswahlstufe 112 zugeführt, die den Sollladedruck plsol als den kleineren der beiden zugeführten Werte an eine Ladedruckregelung weitergibt. Die nicht dargestellte Ladedruckregelung regelt dann den Sollladedruck und Berücksichtigung des Istladedrucks ein. Durch die Maximalwertauswahl 108 wird sichergestellt, dass der Ladesolldruck den Grundladedruck nicht unterschreitet. Der zweite, der Minimalwertauswahl 112 zugeführte Wert wird auf der Basis von wenigstens einem maximalen Ladedruckwert berechnet, so dass der Sollladedruck einen maximalen Ladedruck nicht überschreitet. In 114 (beispielsweise einer Kennlinie) wird der maximale Ladedruck plxsmm für die maximale Motorleistung bestimmt. Dabei wird beispielsweise in einer Kennlinie motordrehzahlabhängig ein Maximaldruck ausgelesen. In 116, welches ebenfalls eine Kennlinie sein kann, wird abhängig von der Turbinendrehzahl des Laders ein maximaler Sollladedruck plxstu bestimmt. In der Maximalwertauswahlstufe 118 wird aus den beiden Maximalwerten der jeweils kleinere ausgewählt und in der Verknüpfungsstelle 120 mit dem Korrekturfaktor FETAZW korrigiert. Die Bildung dieses Korrekturfaktors wird anhand des Ablaufdiagramms der Figur 3 beschrieben. Er stellt den oben beschriebenen Korrekturfaktor in Abhängigkeit des Zündwinkelwirkungsgrades oder der Drehzahlamplituden zur Ruckelvermeidung dar. Der auf diese Weise korrigierte Minimalwert wird zur Bildung des Sollladedrucks plsol der Minimalwertauswahlstufe 112 zugeführt.

Der Korrekturfaktor fetazw bewirkt die oben dargestellte Füllungsabsenkung im Brennraum durch Absenkung des Sollladedrucks.

Das Ablaufdiagramm der Figur 3 beschreibt ein bevorzugtes Ausführungsbeispiel zur Bildung des Faktors FETAZW. Auch hier stellt das Ablaufdiagramm das Programm dar, welches im Mikrocomputer der Steuereinheit abläuft, wobei die Blöcke Programme, Programmteile oder Programmschritte, die Pfeile den Informationsfluss darstellen. Figur 3 zeigt einen Regler 200, vorzugsweise einen Integralregler, dessen Eingangsgröße Δ die in 202 gebildete Abweichung zwischen Istzündwinkelwirkungsgrad und Zündwinkelwirkungsgradgrenzwert darstellt. Der Zündwinkelwirkungsgradgrenzwert wird dabei in der Kennlinie bzw. dem Kennfeld oder der Tabelle 204 abhängig von der Motordrehzahl nmot ausgelesen. Der Istzündwinkelwirkungsgrad ETAZWBM wird, wie beispielsweise im eingangs genannten Stand der Technik erläutert, mittels einer Zündwinkelwirkungsgradkennlinie aus der Abweichung des eingestellten Kennfeldzündwinkels (drehzahl- und lastabhängig) und eines, ebenfalls drehzahl- und lastabhängigen optimalen Zündwinkels ermittelt. Die Ausgangsgröße des Integralreglers 200 stellt den Korrekturwert FETAZW dar. Diese Ausgangsgröße kann sich zwischen einem applizierbaren Minimalwert und einem Maximalwert, der vorzugsweise den Wert 1 annimmt, bewegen. Ist der aktuelle Zündwinkelwirkungsgrad ETAZWBM größer als der Grenzwert FETAZWLD, so integriert der Integrator die Abweichung nach oben, so dass sich der Faktor FETAZW erhöht. Bei Erreichen des Maximalwertes 1 wird er angehalten. Die Füllungsabsenkung ist unwirksam. Ist der aktuelle Zündwinkelwirkungsgrad kleiner als der Grenzwert, so ist Ruckelneigung anzunehmen. In diesem Fall senkt der Integrator den Korrekturfaktor auf kleinere Werte ab, solange der aktuelle Zündwinkelwirkungsgrad unterhalb des Grenzwertes sich befindet. Dies ist so lange der Fall, solange Ruckelneigung besteht. Wenn diese nicht mehr besteht, oder der Minimalwert des Integrators erreicht ist, wird die Reduzierung des Korrekturfaktors beendet. Bei Überschreiten des Grenzwertes durch den aktuellen Zündwinkelwirkungsgrad läuft der Integrator wieder Richtung 1. In der unteren Teillast ist im allgemeinen der Zündwinkelwirkungsgrad besser, so dass hier der Korrekturfaktor in der Regel wieder auf 1 läuft. Bei erneutem Wechsel in die Volllast müsste der Korrekturfaktor und damit die Füllungsabsenkung erneut gebildet werden. Um dies zu verhindern, ist im bevorzugten Ausführungsbeispiel über ein e-nable-Signal vorgesehen, das den Integrator nur in Volllastnähe aktiviert, ausserhalb abschaltet. Daher bleibt der letzte Wert im Integrator außerhalb der Volllast gespeichert. Im bevorzugten Ausführungsbeispiel wird zur Erkennung der Volllastnähe der gemessene Saugrohrdruck PS mit einem maximalen Saugrohrdruck PLXS in 206 verglichen. In der besonderen Ausführungsform wird das Verhältnis aus Saugrohrdruck und maximalem Saugrohrdruck gebildet. Letzter Wert stammt beispielsweise aus einer Kennlinie abhängig von der Motordrehzahl. Das genannte Verhältnis wird einem Vergleicher 208 zugeführt, in dem das genannte Verhältnis mit einem motordrehzahlabhängigen Grenzwert, der in 210, beispielsweise einer Kennlinie, gebildet ist. Überschreitet das Verhältnis die genannte Schwelle, so wird der Integrator gestartet, bei Unterschreitung der Schwelle angehalten.

Wie oben erwähnt wird in einem anderen Ausführungsbeispiel nicht die Zündwinkelwirkungsgradabweichung sondern die Amplitude der Drehzahlschwingung und ihre Abweichung von einem Grenzwert als Regelgröße zur Bildung des Korrekturfaktors FETAZW verwendet. In diesem Fall wird die ermittelte Amplitude mit einem Grenzwert verglichen und die Abweichung einem Regler zugeführt, vorzugsweise einem Integralregler. Dieser bildet einen Korrekturfaktor zwischen einem Minimalwert und 1 entsprechend der obigen Darstellung, wobei bei Überschreiten des Grenzwertes der Korrekturwert abgesenkt, bei Unterschreiten der Korrekturwert angehoben wird. Auch hier kann eine Aktivierung in Volllastnähe sinnvoll sein. Da jedoch die Amplitude direkt erfasst wird, ist die Einschränkung des Betriebs auf Volllastnähe nicht unbedingt notwendig.

Neben der Korrektur des Sollladedrucks wie in Figur 2 dargestellt kann in anderen Ausführungsbeispielen auch der Sollsaugrohrdruck, der begrenzte Sollsaugrohrdruck, oder der Füllungssollwert bzw. der die Luftzufuhr (Drosselklappenstellung) einstellende Wert durch den Korrekturfaktor korrigiert werden und so die Ruckelneigung unterdrückt werden.

## Patentansprüche

1. Verfahren zur Steuerung einer Brennkraftmaschine, bei welcher die Füllung der Brennkraftmaschine beeinflusst wird, wobei ein Maß für die Ruckelneigung des Motors bzw. des Antriebsstrangs ermittelt wird, **dadurch gekennzeichnet, dass** ein Maß für die Ruckelneigung oder für das Ruckeln erfasst wird und einem Regler zugeführt wird, der die Füllung so lange absenkt, bis das Ruckeln verschwunden ist.

2. Verfahren nach Anspruch eins, **dadurch gekennzeichnet, dass** die Füllung durch Absenken des Ladedrucks abgesenkt wird.

3. Verfahren nach einem vorhergehenden Ansprüche, **dadurch gekennzeichnet, dass** die Ruckelneigung abhängig von der Amplitude einer Drehzahlschwingung oder abhängig vom Zündwinkelwirkungsgrad ermittelt wird.

4. Verfahren nach Anspruch 3, **dadurch gekennzeichnet, dass** die Drehzahl die Motordrehzahl oder eine Drehzahl im Antriebsstrang ist.

5. Verfahren nach einem vorhergehenden Ansprüche, **dadurch gekennzeichnet, dass** ein Korrekturfaktor gebildet wird als Ausgangsgröße des Reglers, dessen Eingangsgröße die Abweichung des Zündwinkelwirkungsgrades von einem vorgegebenen Grenzwert oder die Abweichung der Amplitude von einem vorgegebenen Grenzwert ist.

6. Verfahren nach Anspruch 5, **dadurch gekennzeichnet, dass** die Grenzwerte drehzahlabhängig sind.

7. Verfahren nach einem vorhergehenden Ansprüche, **dadurch gekennzeichnet, dass** der Regler nur in Volllastnähe aktiv ist.

8. Verfahren nach einem vorhergehenden Ansprüche, **dadurch gekennzeichnet, dass** der Regler ein Integrator, ein Proportional-Integralregler oder ein Proportionalregler ist.

9. Verfahren nach einem vorhergehenden Ansprüche, **dadurch gekennzeichnet, dass** die Volllastnähe dann erkannt ist, wenn das Verhältnis aus Saugrohrdruck und maximalen Saugrohrdruck einen vorgegebenen, vorzugsweise drehzahlabhängigen Grenzwert übersteigt.

10. Vorrichtung zur Steuerung einer Brennkraftmaschine, mit einer Steuereinheit, welche Ausgangsgrößen erzeugt, welche die Füllung der Brennkraftmaschine steuern, die Steuereinheit aus Ruckelkenngrößen eine Ruckelneigung oder einen Ruckelzustand des Motors bzw. des Antriebsstrangs feststellt, **dadurch gekennzeichnet, dass** die Steuereinheit einen Regler umfasst, der eine Absenkung der Füllung bewirkt, wenn eine Ruckelneigung bzw. ein Ruckelzustand erkannt wird.

## Claims

1. Method for controlling an internal combustion engine in which the charge of the internal combustion engine is influenced, a measure of the tendency of the engine or of the drive train to buck being determined, **characterized in that** a measure of the tendency to buck or of the bucking is sensed and fed to a controller which reduces the charge until the bucking has disappeared.

2. Method according to Claim 1, **characterized in that** the charge is reduced by reducing the charging pressure.

3. Method according to one of the preceding claims, **characterized in that** the tendency to buck is determined as a function of the amplitude of an oscillation in the rotational speed or as a function of the effectiveness of the ignition angle.

4. Method according to Claim 3, **characterized in that** the rotational speed is the engine speed or a rotational speed in the drive train.

5. Method according to one of the preceding claims, **characterized in that** a correction factor is formed as an output variable of the controller whose input variable is the deviation of the effectiveness of the ignition angle from a predefined limiting value, or the deviation of the amplitude from a predefined limiting value.

6. Method according to Claim 5, **characterized in that** the limiting values are dependent on the rotational speed.

7. Method according to one of the preceding claims, **characterized in that** the controller is active only in the vicinity of the full load.

8. Method according to one of the preceding claims, **characterized in that** the controller is an integrator, a proportional-integral controller or a proportional controller.

9. Method according to one of the preceding claims, **characterized in that** the vicinity of the full load is detected if the ratio of the intake manifold pressure to the maximum intake manifold pressure exceeds a predefined limiting value which is preferably dependent on the rotational speed.

10. Device for controlling an internal combustion engine, having a control unit which generates output variables which control the charge of the internal combustion engine, and the control unit detects a tendency to buck, or a bucking state of the engine or of the drive train from bucking characteristic variables, **characterized in that** the control unit comprises a controller which brings about a reduction in the charge if a tendency to buck or a bucking state is detected.

## Revendications

1. Procédé pour la commande d'un moteur à combustion interne selon lequel on influence le remplissage du moteur à combustion interne et on, mesure la tendance aux secousses du moteur ou de la chaîne cinématique,
**caractérisé en ce qu'**
une mesure de la tendance aux secousses ou des secousses elles-mêmes est saisie et transmise à un régulateur qui réduit le remplissage jusqu'à ce que les secousses aient disparu.

2. Procédé selon la revendication 1,
**caractérisé en ce que**
le remplissage est réduit par réduction de la pression de charge.

3. Procédé selon une des revendications précédentes,
**caractérisé en ce que**
la tendance aux secousses est obtenue d'après l'amplitude d'une oscillation de la vitesse de rotation ou d'après le rendement de l'angle d'allumage.

4. Procédé selon la revendication 3,
**caractérisé en ce que**
la vitesse de rotation est la vitesse de rotation du moteur ou une vitesse de rotation existant dans la chaîne cinématique.

5. Procédé selon une des revendications précédentes,
**caractérisé en ce que**
comme grandeur de sortie du régulateur, on forme un facteur de correction dont la grandeur d'entrée est l'écart du rendement de l'angle d'allumage relativement à une valeur limite prédéterminée ou l'écart de l'amplitude relativement à une valeur limite prédéterminée.

6. Procédé selon la revendication 5,
**caractérisé en ce que**
les valeurs limites dépendent de la vitesse de rotation.

7. Procédé selon une des revendications précédentes,
**caractérisé en ce que**
le régulateur est actif seulement dans le voisinage de la pleine charge.

8. Procédé selon une des revendications précédentes,
**caractérisé en ce que**
le régulateur est un intégrateur, un régulateur proportionnel-intégral ou un régulateur proportionnel.

9. Procédé selon une des revendications précédentes,
**caractérisé en ce que**
la proximité de la pleine charge est détectée lorsque le rapport entre la pression de la tubulure d'admission et la pression maximale de la tubulure d'admission excède une valeur limite prédéterminée qui dépend de préférence de la vitesse de rotation.

10. Dispositif pour la commande d'un moteur à combustion interne, comprenant une unité de commande qui produit des grandeurs de sortie qui commandent le remplissage du moteur à combustion interne, et qui constate, sur la base de caractéristiques de secousses, une tendance aux secousses ou un état de secousses du moteur ou de la chaîne cinématique,
**caractérisé en ce que**
l'unité de commande comprend un régulateur qui provoque une réduction du remplissage lorsqu'elle détecte une tendance aux secousses ou un état de secousses.
